# EUROPEAN PATENT APPLICATION

(11) **EP 3 673 865 A1**
(43) Date of publication of application: **01.07.2020**
(21) Application number: 18382990.2
(22) Date of filing: 24.12.2018
(51) Int. Cl.: A61C 7/02, A61C 7/14, A61C 7/36

(54) **ORTHODONTIC DEVICE AND TOOL FOR POSITIONING THE DEVICE**

(71) Applicant: Orthodontic Research and Development, S.L., 08017 Barcelona (ES)
(72) Inventor: Carriere Lluch, Luis, 08017 BARCELONA (ES)
(74) Representative: de Rooij, Mathieu Julien

(57) **Abstract**

An orthodontic kit comprising an orthodontic device for a molar or premolar zone of a mouth and a handling tool for handling the orthodontic device in the molar or premolar zone of the mouth is provided. The orthodontic device comprises a base for attaching the device to a surface of a molar or a premolar, and an attachment for temporarily connecting the orthodontic device to the handling tool. The handling tool comprises a gripping region for gripping the handling tool and a tool connector for temporarily connecting the handling tool to the orthodontic device. The attachment of the orthodontic device and the tool connector form a plug and socket connection. Handling tools and orthodontic devices are also disclosed.

## Description

The present disclosure relates to an orthodontic device, particularly for a molar or premolar zone of a mouth. It further relates to a tool for handling such an orthodontic device in a molar or premolar zone.

### BACKGROUND

Many different orthodontic appliances are known to correct malocclusions, such as e.g. crowns, bridges, brackets, distalizers and retainers.

The aim of some of these orthodontic appliances is to arrange space for teeth in the jaw in such a manner that the teeth can be positioned properly and they can contact each other in their desired positions. In order to correct the orientation or position of one or more teeth, some of these appliances may in use be attached to the surface of a tooth or various teeth. Depending on their function they may be attached on the lingual or labial surface of an incisor, canine, premolar or molar. Alternatively, some orthodontic appliances may also be attached to the bone structure, e.g. to the maxilla or mandible.

Examples of orthodontic appliances that may be attached to teeth include of course the well-known brackets, but also e.g. distalizers, buccal tubes, molar tubes, splint lingual buttons and others.

Orthodontic devices may comprise one or more base surfaces which may be adapted to fit to a particular tooth or one of a plurality of teeth. This base surface may be substantially flat or concave to adapt to the specific tooth it needs to be attached to.

Before attachment, the surface of the tooth may be cleaned, possibly etched and subsequently dried and isolated. Then, an adhesive may be applied to the surface of the tooth. It is known to use an adhesive which may be activated using light. The orthodontic device, possibly also comprising an adhesive on its base surface may then be attached to the surface of the tooth. After activation of the adhesive using e.g. light, the orthodontic appliance may be firmly fixed to the tooth. Different types of adhesives may be used, such as e.g. composite resins or glass ionomer cement. This process is also referred to as "bonding", or, depending on the adhesive used "cement bonding". In some examples, a primer and varnish may be applied to a tooth for bonding.

The orthodontic device may stay bonded to a tooth by chemical bonding forces and/or mechanical retention forces. Depending on the base of the orthodontic device, specifically its shape and material, chemical bonding or mechanical retention may be dominant.

Tweezers may be used for bracket placement and holding the orthodontic device in the correct position during the bonding process. Tweezers may be of different types. Depending on the type of tweezers, the tweezers may be open by default and need to be squeezed to close the tweezers and clamp a device. Other tweezers that may be used are self-locking, i.e. they are closed by default, and need to be squeezed to open them.

Orthodontic devices are generally becoming smaller for aesthetic reasons. As the orthodontic devices are increasingly smaller, holding them with tweezers is getting more difficult. Some orthodontic devices may comprise indentations arranged at their lateral sides to facilitate the tweezers to hold the orthodontic device in a predetermined position during bonding. However, despite these indentations, it is still challenging to position and to hold the orthodontic device in a correct place with the tweezers, in particular in a molar zone of a mouth.

Positioning an orthodontic device in a molar or premolar zone of a mouth may require a relative large space for moving the tweezers inside the mouth. The required space is not available in all patients, especially in the molar zone where a patient's cheek can get in the way. Positioning and cementing an orthodontic device on a lingual surface of a tooth can generally be more complicated than positioning and cementing on a labial surface. In the molar zone and premolar of the mouth, the parotid duct, which takes saliva from the major salivary gland into the mouth, can be found.

The orthodontic device may be difficult to hold with the tweezers and the orthodontic device may fall from the tweezers. Holding the orthodontic device through the indentations by the tweezers may thus be a laborious task. Attaching the orthodontic device to a tooth or to a plurality of teeth may thus take a relative long time. Hence, the orthodontic device may get wet more easily which may additionally lead to bonding problems, especially in the zone close to the parotid duct. In other cases, the orthodontic device may be positioned wrongly.

The present disclosure provides examples of systems and methods that at least partially resolve some of the aforementioned disadvantages.

### SUMMARY

In a first aspect, an orthodontic kit is provided. The orthodontic kit comprises an orthodontic device for a molar or premolar zone of a mouth and a handling tool for handling the orthodontic device in the molar or premolar zone of the mouth. The orthodontic device comprises a base for attaching the device to a surface of a molar or premolar, and an attachment for temporarily connecting the orthodontic device to the handling tool. The handling tool comprises a gripping region for gripping the handling tool and a tool connector for temporarily connecting the handling tool to the orthodontic device. The attachment of the orthodontic device and the tool connector form a plug and socket connection.

As the attachment and the tool connector have a complementary shape, the tool connector may engage the attachment. The tool may thus be easily connected and disconnected from the orthodontic device. When the tool and the orthodontic device are connected, the tool may retain and handle the orthodontic device. The orthodontic device and the tool may be relatively firmly connected and therefore the orthodontic device falling down from the tool may be prevented. Accordingly, the orthodontic device may be easily and safely handled by the tool inside the mouth of a patient. The orthodontic device may thus be more precisely moved inside a mouth and attached to a tooth or to a plurality of teeth or to a jawbone, e.g. an upper jawbone or a lower jawbone.

Furthermore, ergonomics of attaching an orthodontic device in a molar or premolar zone of a mouth may be improved. Time for attaching the orthodontic device may also be reduced and the problems of a poor adherence of the orthodontic device derived from an excess of moisture may be minimized.

In addition, connecting the tool to the handle through these complementary shapes requires less free space than other holding systems of the prior art e.g. using tweezers. This allows handling the orthodontic device particularly in the molar zone of a mouth, i.e. the rear part of the mouth, without interfering with the tongue or some orthodontic appliances already mounted in the mouth.

A molar zone as used throughout the present disclosure is to be understood as the zone in the mouth comprising the molar teeth, including particularly the labial and lingual surfaces of the molar teeth. The premolar zone as used throughout the present disclosure may be understood as the zone of the mouth comprising the premolars, including particularly the labial and lingual surfaces of the premolars. The premolars are the teeth located between the canines and the molars.

A plug and socket connection as used throughout the present disclosure may be understood as male-female connectors or connection portions, wherein the male and female connectors or connection portions have complementary shapes, such that the male connector is received in the female connector and the female connector can hold and retain the male connector. In some examples, the male and female connectors may form a snap fit. Such snap fit connections may include elastic deformation when inserting the male connector into the female connector, such that the male connector is retained in the female connector.

In some examples, the tool connector and the attachment may be connected to each other at a limited number of different relative positions. According to this aspect, the handling tool and the orthodontic device may be connected at multiple relative positions or orientations. For example, the tool may be connected to the orthodontic device at different angles with respect to the orthodontic device. As there are multiple possible connecting positions, the tool may engage the orthodontic device more easily. A healthcare professional may decide, depending on the orthodontic device to be cemented, the precise location, the personal preference and/or the specific procedure which orientation of the orthodontic device with respect to the tool may be most beneficial.

In some examples, the attachment may comprise a plurality of straight edges. For example, the attachment may comprise a polygonal shape. In some examples, the lateral sides of the attachment may have a substantially similar length. The polygonal shape may be a regular shape having two or more sides, e.g. pentagon, hexagon, heptagon, octagon or decagon. In some examples, the polygonal shape may be a star, e.g. a regular star polygon or an isotoxal star polygon. The stars may comprise e.g. 5 to 24 points.

In these examples, the tool connector may engage the attachment at different positions. For example, when the attachment has an octagonal shape, the tool may engage the orthodontic device at 8 different positions. In this example, from one engaging or connection position to the adjacent engaging position the tool rotates 45° with respect to the orthodontic device.

In a further aspect, an orthodontic device for a molar or premolar zone of a mouth is provided. The orthodontic device may be configured to be used in the orthodontic kit according to any of the examples herein disclosed. The orthodontic device comprises a base for attaching the orthodontic device to a surface of a molar or premolar and a connector for temporarily connecting the orthodontic device to a handling tool. A handling tool according to any of the examples herein disclosed may be used for handling or moving the orthodontic device.

In yet a further aspect, a handling tool for handling an orthodontic device in a molar or premolar zone of a mouth is provided. The handling tool may be configured to be used in the orthodontic kit according to any of the examples herein disclosed. The handling tool comprises a gripping area for gripping the handling tool and a tool connector for temporarily connecting the handling tool to an orthodontic device. The handling tool may thus be connected to an orthodontic device according to any of the examples herein discloses for handling the orthodontic device in a molar zone of a mouth.

### BRIEF DESCRIPTION OF THE DRAWINGS

Particular examples of the present disclosure will be described in the following by way of non-limiting examples, with reference to the appended drawings, in which:
Figures 1a and 1b illustrate some of the terminology used herein;
Figure 2a illustrates an example of an orthodontic kit according to one example showing a cross-sectional view of an orthodontic device;
Figure 2b illustrates an upper view of the orthodontic device of figure 2a;
Figure 2c illustrates an example of a handling tool according to the present disclosure;
Figure 2d illustrates another example of a handling tool according to the present disclosure;
Figure 3 illustrates an example of an orthodontic kit according to one example;
Figure 4 schematically represents a tool connector connected to an attachment at several positions according to one example.
Figures 5a - l schematically represents examples of tool connectors and attachments according to the present disclosure;
Figure 6 schematically illustrates an example of orthodontic device used in an orthodontic device for the segmental distalization of a posterior jawbone area;
Figure 7a and 7b schematically illustrate different views of another example of an orthodontic device configured to be used in the orthodontic device of figure 6.
Figure 8 schematically illustrates a bracket system including orthodontic devices according to one example.

### DETAILED DESCRIPTION OF EXAMPLES

The following description is merely exemplary in nature and is not intended to limit the present disclosure, application, or uses. It should be understood that throughout the drawings, corresponding reference numerals indicate like or corresponding parts and features.

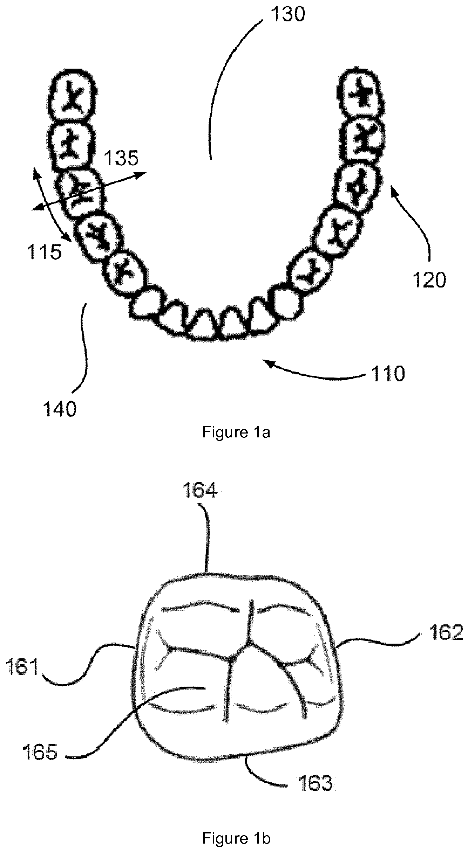

Figure 1a schematically illustrates the arrangement of teeth in the lower jaw (mandible). A front portion of the mouth 110 may be referred to as a mesial region. A rear portion of the mouth 120 may be referred to as a distal region. In orthodontics, mesial and distal are terms used to refer to something being respectively closer to and further away from a central midline of the arch of teeth.

In the distal region of the mouth, the molar zone may be found. The molar zone may include a first molar, a second molar and possibly a third molar ("wisdom tooth").

An inner portion of the mouth behind the teeth 130 may be referred to as a lingual region (a region in which the tongue is located). An outer portion of the mouth 140 may be referred to as a labial region (a region in which the lips are located). A mesial-distal direction 115 with respect to a specific tooth (first molar) has been schematically indicated in figure 1. Also indicated in figure 1 is a lingual-labial direction 135 with respect to the same tooth. This terminology will be adhered to in the present disclosure.

Even though a mandible is illustrated in this particular figure, it should be clear that the same terminology applies to the maxilla.

Figure 1b schematically illustrates a molar. A mesial side of the molar is indicated by reference sign 161 (closer to a midline of the arch of teeth), whereas a distal side of the molar is indicated with reference sign 162 (further away from the midline). Reference signs 163 and 165 respectively indicate the lingual and labial sides (or surfaces) of the molar. Reference sign 150 indicates the occlusal surface of the tooth. An occlusal surface of a tooth in the maxilla (upper jaw) faces an occlusal surface of a tooth in the mandible and *vice versa.*

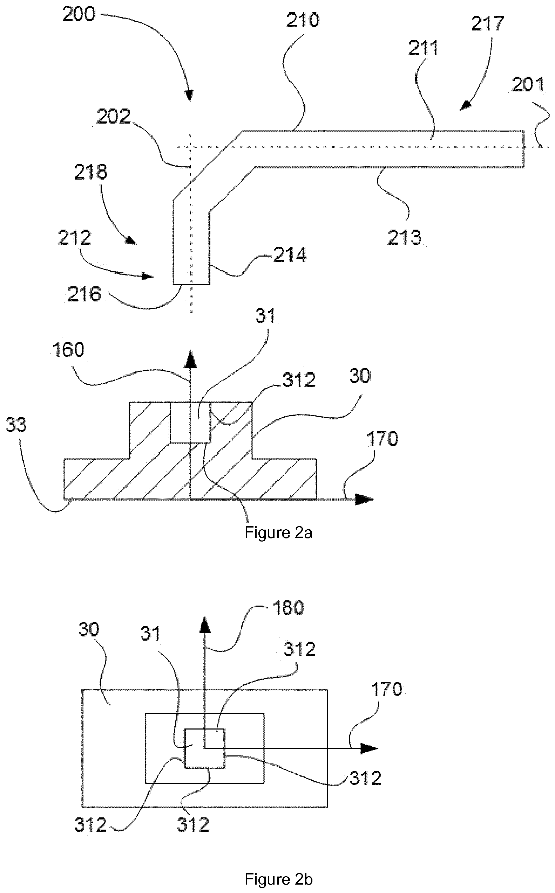

Figure 2a illustrates an example of an orthodontic kit according to one example showing a cross-sectional view of an orthodontic device and figure 2b illustrates an upper view of the orthodontic device illustrated in figure 2a. The orthodontic kit 200 comprises an orthodontic device 30 and a handling tool 210. The orthodontic device 30 comprises a base 33 for attaching the orthodontic device to a labial or lingual surface of a molar or a premolar, and an attachment 31 for temporarily connecting the orthodontic device 30 to the handling tool 210.

In this example, the orthodontic device 30 extends along the axis 160 from the surface of the base 33 to the connector 31. The surface of the base may be defined by the axes 170 and 180. The connector may be arranged perpendicular to surface of the base at the opposite side of the base. The axis 160 may be perpendicular to the surface of the base 33.

In these examples, the orthodontic device is shown as having a substantially inverted mushroom shape. In other examples, the orthodontic device may be disc-shaped. The orthodontic device of figures 2a and 2b is made from a single piece. The base including base surface and the attachment are integrally formed in this case. Alternatively, the orthodontic device may be made by joining several pieces, e.g. by joining the attachment to the base. The base may comprise a base surface for attachment to a tooth, and the attachment may be attached at the opposite side of the base surface. In some examples, only for the placement and bonding procedure, the attachment is temporarily connected to the base. The connection between base and attachment may involve e.g. threads or a bayonet coupling.

The orthodontic device may be made from any suitable material including e.g. metals (alloys) or polymers. The polymers may be fibre-reinforced or not. The orthodontic device may be moulded or 3D-printed. When it is made from metals, they may also be made by machining.

In some examples, the base 33 may include protrusions at its base surface (not visible in figures 2a and 2b) that aide in bonding to a molar. These protrusions protrude along the axis 160 at the opposite direction of the connector. Several arrays of protrusions may be arranged along the axis 180 or 170.

The handling tool 210 of figure 2a comprises a gripping region 211 for gripping the handling tool at or near a proximal end of the handling tool. The handling tool 210 furthermore comprises a tool connector 212 for temporarily connecting the handling tool 210 to the orthodontic device 30. In some examples, the handling tool may comprise a bar 213 extending between the gripping region 211 and the tool connector 212. In the example of figure 2a, the bar 213 comprises a proximal region 217 (including the gripping region 211) extending along a first axis 201, and a distal end region 218 (where the tool connector 212 is located) extending along a second axis 202. In this specific example the first axis 201 and the second axis 202 form an angle of about 90°. The bar thus forms a substantially right angle between the tool distal end region 218 and the gripping region 211.

In this specific example, the handling tool further comprises an intermediate portion forming an angle with the proximal portion and forming an angle with the distal end portion.

In a further example, the handling tool may comprise a substantially convex bar, e.g. a curved bar.

In some examples, the angle between the first axis 201 and the second axis 202 may be between 0° and 180°, specifically between 15° and 150°, and more specifically between 30° and 150°. An angle of 180° means that the second and first axes have the same direction. An angle of 0° means that the first axis is aligned but opposite to the second axis.

In general, the male-female coupling may be directed along the second axis 202, but the coupling may also be directed along a third axis perpendicular to the second axis 202.

In figures 2a and 2b, the attachment 31 is a recess for receiving the tool connector 212. I.e. the attachment in this case forms a female part of the coupling. The tool connector 212 is therefore a protuberance configured to be inserted in the attachment 31. The tool connector 212 and the attachment 31 may thus form a plug and socket connection. The recess may inwardly extend towards the base 33 along the axis 160. The attachment may comprise a bottom side 311 and two or more lateral sides 312, e.g. four lateral sides. The tool connector 212 may comprise the same number of lateral sides 214. The lateral sides 214 of the tool connector 212 may engage the lateral sides 312 of the attachment and a firm connection may thus be established. In these examples, when the orthodontic device and the tool are connected, the top side 216 of the tool connector faces the bottom side 311 of the orthodontic device.

In these figures, the bottom side 311 of the attachment may be substantially flat. Alternatively, the bottom side 311 and the top side of the tool may comprise roughness which may enhance the connection between the orthodontic device and the tool.

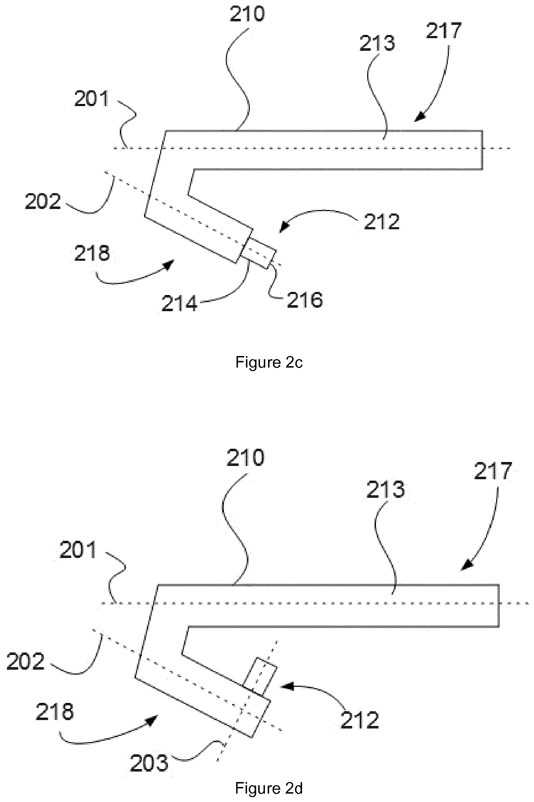

Figure 2c illustrates a further example of a handling tool according to the present disclosure. The handling tool 210 of this figure may be suitable to be connected to orthodontic device of figures 2a and 2b. In this example, the handling tool comprises a proximal region 217 extending along a first axis 201 and a distal end region 218 extending along a second axis 202. In this specific example, the first axis 201 and the second axis 202 form an angle about 30° between them.

In this example, the tool connector 212 extends along the second axis 202. The tool connector 212 may comprise several side edges 214 and a top side 216 for connecting to an attachment of an orthodontic device. In this example, the bar 213 in the distal end region 218 is wider than the connector 212.

Figure 2d illustrates another example of a handling tool 210 according to the present disclosure. As the example of Figure 2c, the first axis 201 of the proximal region 217 and the second axis 202 of the distal end region 218 form an axis of approximately 30°. It should be clear that other angles can be chosen.

The tool connector 212 of this example extends along a third axis 203. In this figure, the third axis 203 is perpendicular to the second axis 202. In some examples the tool connector 212 may extend along the axis 203 forming an angle between 0° and 150° between the second 202 and the third axis 203.

Although in figures 2a - 2d, the tool connector 212 protrudes from the bar 203, a similar arrangement may be applied to those examples wherein the tool connector is a recess.

The tool may be adapted for specific procedures and/or specific orthodontic devices. The angle between the first and second axes and the connectors may be chosen to be suitable for the attachment to e.g. a lingual surface or labial surface.

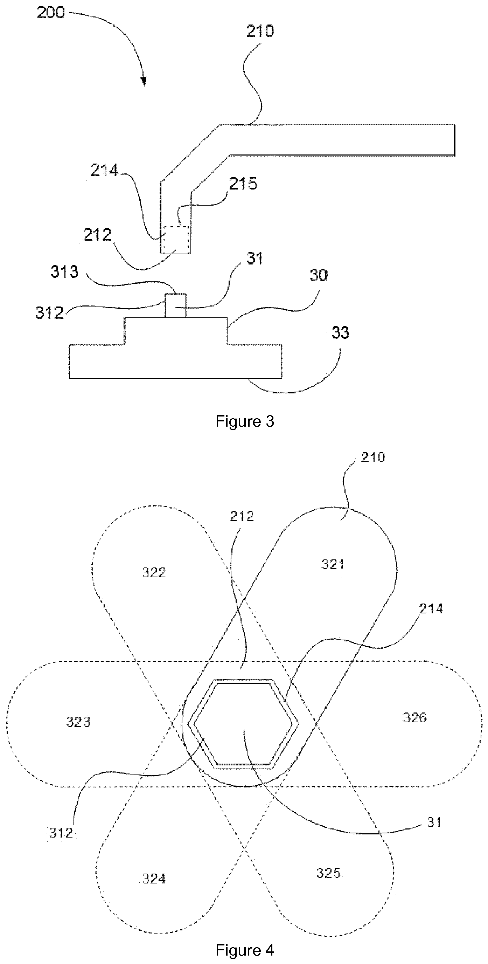

Figure 3 illustrates an example of an orthodontic kit 200 according to one example. In figure 3, the attachment 31 is a protrusion protruding perpendicular to the base 33. The connector may comprise a top side 313 arranged at the opposite side to the base and lateral side edges 312.

In Figure 3, the tool connector 212 has the form of a recess for receiving the attachment. The recess may comprise a bottom 215 and side edges 214. The attachment 212 is configured to be inserted in the recess of the tool. When the attachment is inserted in the tool connector the top side 313 of the orthodontic device faces the bottom 215 of the tool and the side edges 214 of the tool engage the side edges 312 of the orthodontic device.

In the example of figure 3, the attachment 31 is joined, e.g. with adhesive, to the base 33. The attachment and the base may thus be manufactured from different materials or by using different processes.

Figure 4 schematically represents a tool connector 212 connected to an attachment 31 at several predefined positions according to one example. In this example the tool connector 212 surrounds the attachment 31, i.e. the attachment 312 is "male" received by the "female" tool connector 212. However in other configurations, the tool connector 212 may be male and received and retained by the female attachment 312, i.e. the tool connector is inserted into the attachment. The tool and the attachments respectively comprise six lateral edges 214 and 312 (only indicated one of these six in this figure). In this example, the attachment 31 and the tool connector 212 have a hexagonal shape. Alternatively, the attachment and/or the tool connector may have a different shape.

In this example, the tool and the orthodontic device may be connected at six different positions. The tool and the orthodontic device are connected at the position 321 and the dashed lines represent the alternative different positions 322 - 326 that can be adopted by the tool with respect to the orthodontic device when the tool and the orthodontic device are connected. In this example, the orthodontic device and the tool may be connected at the position 322 in which the tool is rotated 60° with respect the position 321. Each of these positions is rotated 60° with respect to the previous ones.

These several possible connecting positions allow the orthodontist or other healthcare professional to engage the tool with the orthodontic device at a predetermined number of different relative positions. The relative orientation may be selected e.g. so that interference of the orthodontic device and/or of the tool with teeth or with the tongue may be prevented. This also helps to increase ergonomics in orthodontic appliances.

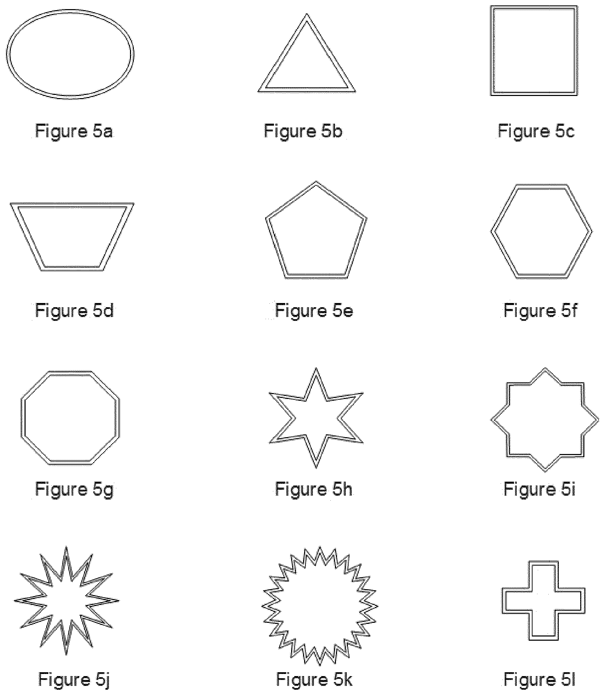

Figures 5a - i schematically represent examples of suitable shapes of tool connectors and attachments according to the present disclosure. In these figures, the tool connector may be inserted into the attachment or *vice versa.*

In figure 5a the connectors have an oval shape. This shape only allows connecting the tool and the orthodontic device in a single position.

The connectors of figures 5b - i have more than two side edges and form polygonal shapes. Figure 5b shows connectors having three lateral sides and forming a substantially equilateral triangle. Connectors of figures 5c and 5d have four sides, being respectively a square or a trapezium. A rectangular shape may also be a suitable shape for these connectors. The square-shaped connector of figure 5c allows the tool be connected at four different positions with respect to the orthodontic device. However, the trapezoidal shape of the connectors of figure 5d only allows one possible connecting position.

Figures 5e - g respectively show a pentagon, a hexagon and an octagon. These are examples of connectors having a substantially regular polygonal shape. Other regular polygonal shapes may be also possible, e.g. decagon or dodecagon. In these figures, the tool may engage the orthodontic device at multiple connecting positions.

Figures 5h - k are examples of connectors having a star shape. Figure 5h and 5i respectively represent a 6-pointed and a 8-pointed star. The star of figure 5j has 12 points while the star of figure 5k has 24 points. These shapes provide multiple possible connecting positions. Other types of star shapes may be also be suitable.

Figure 5l is another example of a suitable shape of an attachment and of a tool connector. In this figure, the connectors have a cross shape which allows four different positions.

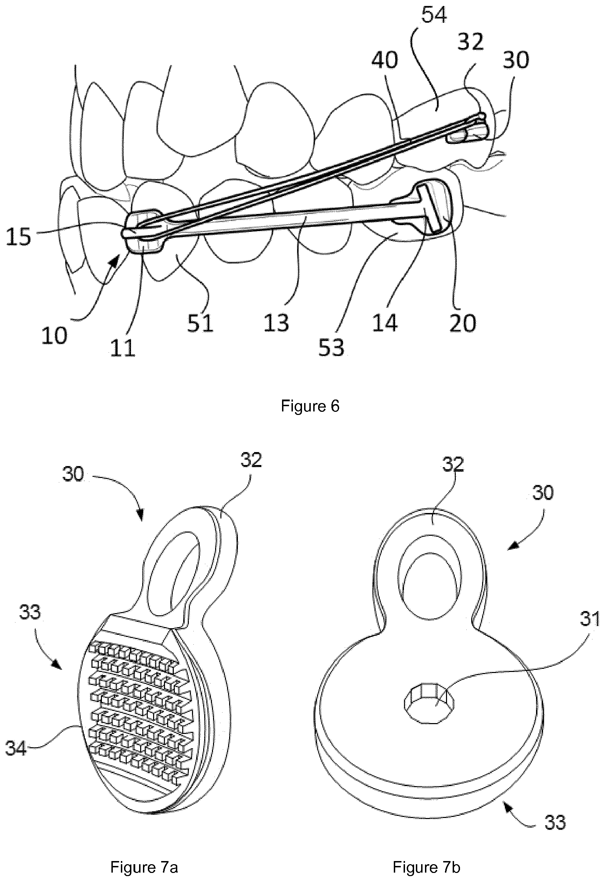

Figure 6 schematically illustrates an orthodontic device used in an orthodontic device for the segmental distalization of a posterior jawbone area. The orthodontic device comprises a mesial element 10 and a distal element 20. The mesial element 10 has a base 11 which may be configured to be attached to a canine, in this particular example a mandibular canine 51. The distal element 20 may be configured to be attached to a molar, e.g. a mandibular molar 53. Molars are arranged at a molar zone of a mouth.

The mesial element 10 comprises an arm 13 ending in a transverse pin 14 which is located in a receptacle of the distal element 20.

A mesial element 10 comprises a projection 15 around which a rubber band 40 may be arranged. The rubber band 40 may also be arranged around a projection or hook 32 on an orthodontic device 30, thereby exerting force on the mesial element 15. The orthodontic device 30 may be mounted e.g. to a maxillary molar 54. The orthodontic device 30 comprise a base (not visible in figure 3) configured to be attached to the molar 54. The orthodontic device 30 of this figure is shown to be a molar tube. Alternatively, other anchors might be used.

This way, a force pulling the maxillary canine backwards is provided. If the patient is wearing e.g. a splint (or another fixation device) that acts as a solid orthodontic device and fixes the teeth of the mandible in position, it may be ensured that the teeth in the mandible do not move forwards, and that the maxillary canine is pulled backwards.

Due to the connection between the mesial element 10 and the distal element 20 of the distalizer, the mandibular molar 53 may thus also be pushed backwards. At the same time, due to the shape of the arm in between the canine and the molar and due to the position of the distal element on the molar, a rotational force is also exerted upon the molar 53. This rotational force may result in a pivot about the palatal root of the maxillary molar. Also, a rotation in the distal direction of the molar ("uprighting") may result. Thus a backwards force and a rotational force may be exerted upon the molar at the same time.

Although not visible in figure 6, the orthodontic device 30 may comprise an attachment according to any of the examples herein disclosed. A tool having a connector with a complementary shape may be connected to the attachment. The tool may thus handle the orthodontic device. By moving the tool, the orthodontic device may reach the distal area of the mouth.

In this example, the orthodontic device 30 is a molar tube. The molar tube is a specific example of a small orthodontic device, which is to be placed in an area of the mouth that is difficult to reach, the molar zone. The molar tube is therefore an orthodontic device that may particularly benefit from the male-female couplings described herein. A molar tube may also be used in a bracket system, either on the labial side or on the lingual side.

In alternative configurations, a traction element other than a rubber band might be used. In examples, the distalization element 10 may also be provided with an attachment for connection with a tool.

In the example of figure 6, the objective of the treatment is a distalization of a segment of teeth in the mandible. In other examples, the distalization device may instead be attached to a maxillary canine and a maxillary molar for distalization of a maxiallary posterior jawbone sector.

For example, figure 7a and 7b schematically illustrate different views of another example of an orthodontic device configured to be used for example instead of the molar tube of figure 6. The orthodontic device 30 of figures 7a and 7b comprises a base surface 33 for attaching the orthodontic device in a molar, e.g. in the molar 54 of figure 6. The base surface 33 comprise a plurality of protrusions 34 or or a different form of roughness to enhance the adherence of the orthodontic device to the molar. The orthodontic device further comprises an attachment 31 for connecting the orthodontic device to a corresponding handling tool.

In this example, the base of the orthodontic device 30 is substantially disc shaped. The attachment 31 is arranged on a side opposite to the base surface 33. In figure 7, the connector 31 is a recess. In other examples, the connector may be a protrusion. The orthodontic device of figure 7 also comprises a hook 32 for connecting a traction element. The traction element may be the rubber band 40 of figure 6.

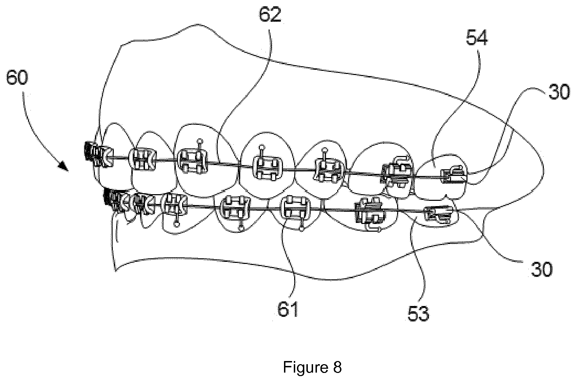

Figure 8 schematically illustrates a bracket system 60 including orthodontic devices used as molar tubes. The bracket system 60 comprises several bracket elements 61 attached to the teeth, e.g. incisors or canines and molar tubes 30 attached to molars, e.g. to maxillary molars 54 and to mandibular molars 53. A guide wire 62 is inserted through the bracket elements 61 and its ends are retained by the molar tubes. The bracket elements 61 may include a clamping mechanism for clamping the guide wire 62. Therefore, the guide wire 62 may apply a traction force to the teeth for correcting their position.

The molar tubes 30 of figure 8 are attached at the labial side of the mandibular molars 53 and of the maxillary molars 54. In other examples, the molar tubes may be attached at the lingual side of the molars. The molar tube 30 may comprise a tube for inserting and fixing an end of the guide wire 62. In some examples, the orthodontic device or molar tube 30 may comprise a hook for connecting a traction element, e.g. a rubber band.

The orthodontic device 30 also comprises an attachment (not visible in figure 8) to engage a connector of a tool. The orthodontic device may thus be handled by the tool.

In yet a further aspect, a method for attaching an orthodontic device in a molar or a premolar zone of a mouth is provided. The method comprises connecting a handling tool to the orthodontic device. The handling tool and the orthodontic device comprise a connector. These connectors have a complementary shape. Connecting a handling tool to the orthodontic device comprises engaging the tool connector with the attachment. The method further comprises handling the orthodontic device by the tool and positioning the orthodontic device in the desired position in the molar or premolar zone of a mouth. Then, the base of the orthodontic device is attached to the molar or premolar zone of a mouth, e.g. a molar or a bone structure.

In some examples, the method may further comprise applying an adhesive on the base of the orthodontic device and/or on the molar or the premolar zone, e.g. a surface of a molar. In these examples, the method may further comprise activating the adhesive. Activating the adhesive may include switching on a light. The base may thus be bonded to the tooth.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. An orthodontic kit comprising:
an orthodontic device for a molar or premolar zone of a mouth; and
a handling tool for handling the orthodontic device in the molar zone of the mouth;
the orthodontic device comprising:
a base for attaching the device to a surface of a molar or a premolar; and
an attachment for temporarily connecting the orthodontic device to the handling tool;
the handling tool comprising:
a gripping region for gripping the handling tool; and
a tool connector for temporarily connecting the handling tool to the orthodontic device;
wherein the attachment of the orthodontic device and the tool connector form a plug and socket connection.

2. An orthodontic kit according to claim 1, wherein the tool connector and the attachment are configured to be connected to each other at a limited number of different relative positions.

3. An orthodontic kit according to any of claims 1 - 2, wherein the attachment of the orthodontic device has a polygonal shape.

4. An orthodontic kit according to any of claims 1 - 3, wherein the attachment of the orthodontic device is a recess for receiving the tool connector and the tool connector is a protuberance configured to be inserted in the attachment.

5. An orthodontic kit according to any of claims 1 - 3, wherein the attachment of the orthodontic device is a protuberance extending from the base and configured to be inserted in the tool connector and the tool connector is a recess for receiving the attachment of the orthodontic device.

6. An orthodontic kit according to any of claims 1 - 5, wherein the attachment is configured to be temporarily connected to the base.

7. An orthodontic kit according to any of claims 1 - 5, wherein the orthodontic device is made from a single piece.

8. An orthodontic kit according to any of claims 1 - 7, wherein the orthodontic device is a molar tube.

9. An orthodontic kit according to any of claims 1 - 7, wherein the orthodontic device is a lingual bracket.

10. An orthodontic kit according to any of claims 1 - 9, wherein the orthodontic device is an orthodontic device configured to be used in an orthodontic device for the segmental distalization of a posterior jawbone area.

11. An orthodontic kit according to any of claims 1 - 10, wherein the handling tool further comprises a bar extending between the gripping region and the tool connector, optionally a substantially convex bar.

12. An orthodontic device for use in an orthodontic kit according to any of claims 1 - 11 and comprising:
a base for attaching the device to a surface of a molar;
an attachment for temporarily connecting the device to a handling tool.

13. A handling tool for use in an orthodontic kit according to any of claims 1 -11 comprising:
a gripping area for gripping the handling tool at a proximal region of the handling tool;
a tool connector for temporarily connecting the handling tool to an orthodontic device at a distal region of the handling tool.

14. The handling tool according to claim 13, wherein a gripping region extends along a first axis, and a distal region extends along a second axis, wherein an angle between the first axis and the second axis is between 15° - 150°.

15. The handling tool according to claim 13 or 14, wherein a distal region of the handling tool is magnetic.
